# DEMANDE DE BREVET EUROPEEN

(11) **EP 4 768 742 A1**
(43) Date de publication de la demande: **01.07.2026**
(21) Numéro de dépôt: 25225901.5
(22) Date de dépôt: 19.12.2025
(51) Int. Cl.: F16C 29/00, F16C 29/06, F16C 33/52, F16C 33/66

(54) **CHAÎNE À ROULEAUX POUR MODULES DE ROULEMENT RECIRCULANT, DESTINÉE À UNE APPLICATION OFFSHORE**

(30) Priorité: 27.12.2024 FR 2415339
(71) Demandeur: REEL, 69450 Saint-Cyr au Mont d'Or (FR)
(72) Inventeur: KONATE, Karamoko, 17220 SAINT ROGATIEN (FR); BOUTEILLER, François, 85200 AUCHAY SUR VENDEE (FR)
(74) Mandataire: Jacobacci & Partners France

(57) **Abrégé**

La présente invention concerne une chaîne à rouleaux (10) pour un module de roulement recirculant (20), destinée à une application offshore.

La chaîne à rouleaux (10) comprend plusieurs rouleaux (11) qui sont emmanchés chacun sur un arbre (12).

Les rouleaux (11) sont libres en rotation par rapport à leurs arbres (12) associés. Et la surface intérieure cylindrique (112) dudit rouleau (11) et laquelle surface extérieure (121) dudit arbre (12) définissent une chambre étanche (15) qui est remplie d'un fluide lubrifiant.

Chaque arbre (12) est verrouillé en rotation avec au moins un maillon (13) associé par le biais de moyens de verrouillage en rotation (16).

## Description

### Domaine technique de l'invention

La présente invention concerne le domaine technique des chaînes à rouleaux pour les modules de roulement recirculant, destinées aux applications offshore.

### Etat de la technique

Dans le domaine offshore, les besoins en solutions technologies capables de guider et de manœuvrer des structures de plus en plus massives ne cessent de croître.

Ce besoin est notamment marqué dans le secteur de l'éolien offshore, où l'installation, le positionnement et l'entretien des équipements nécessitent des solutions mécaniques fiables et adaptées à des environnements exigeants.

Pour répondre à ces exigences, il est connu d'utiliser des modules de roulement recirculant intégrant des chaînes à rouleaux. Ces chaînes se composent de plusieurs rouleaux, chacun emmanché sur un arbre qui est relié à un arbre adjacent par deux maillons.

Ces chaînes permettent de réaliser des mouvements rapides et contrôlés entre des châssis mobiles d'une structure offshore, ce qui est essentiel pour optimiser les opérations dans ces environnements complexes.

Cependant, malgré leur efficacité, les solutions actuelles présentent des limites significatives. Les maillons des chaînes à rouleaux conventionnelles sont particulièrement sensibles aux mouvements répétitifs, ce qui peut entraîner une dégradation prématurée, voire une rupture sous les contraintes mécaniques élevées caractéristiques des applications offshore. Cette faiblesse représente un risque majeur, par exemple dans des opérations critiques telles que la pose d'éoliennes offshore, où des pannes peuvent avoir des conséquences économiques et environnementales considérables.

Ainsi, il existe un besoin accru pour de nouvelles chaînes à rouleaux offrant une meilleure résistance aux charges dynamiques.

### Présentation de l'invention

Afin de remédier à l'inconvénient précité de l'état de la technique, la présente invention propose une chaîne à rouleaux pour un module de roulement recirculant, destinée à une application offshore.

La chaîne à rouleaux comprend plusieurs rouleaux qui sont emmanchés chacun sur un arbre. Chaque arbre comportant une surface extérieure et étant relié à un arbre adjacent par deux maillons.

Et, selon l'invention, lesdits rouleaux, de forme tubulaire, comportent chacun :
- une surface extérieure cylindrique, et
- une surface intérieure cylindrique, définissant un logement traversant dans lequel est emmanché ledit arbre,
lesquels rouleaux sont libres en rotation par rapport à leurs arbres associés,
laquelle surface intérieure cylindrique dudit rouleau et laquelle surface extérieure dudit arbre définissent une chambre étanche qui est remplie d'un fluide lubrifiant,
et chaque arbre est verrouillé en rotation avec l'un au moins desdits maillons associés par le biais de moyens de verrouillage en rotation.

Grâce au verrouillage en rotation de chaque arbre avec l'un au moins des maillons associés, le mouvement de rotation s'effectue principalement entre le rouleau et son arbre (et non entre l'arbre et les maillons).

Cela permet de minimiser les frottements entre les arbres et les maillons, réduisant ainsi l'échauffement des maillons. Cette diminution de l'échauffement limite les risques de dégradation thermique et d'usure prématurée.

En évitant les contraintes excessives au niveau des maillons, l'invention prévient les ruptures liées aux mouvements répétitifs et à l'usure mécanique. Cela améliore la durée de vie de la chaîne dans des environnements exigeants, tels que les applications offshore.

La diminution des risques de rupture des maillons entraîne une réduction des interventions de maintenance et des coûts associés, notamment dans des environnements difficiles d'accès comme les structures offshore.

En favorisant les mouvements de rotation au niveau des surfaces lubrifiées entre le rouleau et l'arbre, l'invention assure une meilleure résistance aux charges dynamiques, ce qui est crucial pour des opérations répétées à grande vitesse.

En outre, la conception intégrant une chambre étanche remplie de fluide lubrifiant permet une réduction significative des forces de frottement entre la surface intérieure cylindrique dudit rouleau et la surface extérieure dudit arbre, prolongeant ainsi la durée de vie de l'ensemble de la chaîne.

D'autres caractéristiques non limitatives et avantageuses du produit conforme à l'invention, prises individuellement ou selon toutes les combinaisons techniquement possibles, sont les suivantes :
- le rouleau et son arbre associé coopèrent par le biais de moyens d'assemblage en rotation, avantageusement choisis parmi des paliers lisses ou des paliers à roulement, avantageusement rapportés entre ladite surface intérieure cylindrique dudit rouleau et ladite surface extérieure dudit arbre ;
les moyens d'assemblage en rotation comprennent deux paliers, par exemple deux paliers lisses à collerette, avantageusement en bronze, qui sont solidarisés avec ladite surface intérieure cylindrique, ou deux paliers à roulement, par exemple des roulement à billes, des roulements à rouleaux ou des roulements à aiguilles ;
- ladite chambre étanche est obturée latéralement par deux joints annulaires qui s'étendent chacun entre la surface intérieure cylindrique dudit rouleau et la surface extérieure dudit arbre ; de préférence, chaque joint annulaire est agencé entre un tronçon de la surface intérieure cylindrique dudit rouleau et un tronçon de la surface extérieure dudit arbre, lesquels tronçons sont le cas échéant à l'extérieur par rapport auxdits paliers ; de préférence encore, les joints annulaires sont choisis parmi les joints métalliques, comportant par exemple deux bagues d'étanchéité dont une première bague d'étanchéité est verrouillée en rotation avec la surface intérieure cylindrique dudit rouleau et une seconde bague d'étanchéité est verrouillée en rotation avec la surface extérieure dudit arbre, ou les joints à lèvre, comportant par exemple un joint à lèvre verrouillé en rotation avec la surface intérieure cylindrique dudit rouleau et une bague d'étanchéité verrouillée en rotation avec la surface extérieure dudit arbre ;
- ledit arbre comporte deux tronçons terminaux coopérant avec un orifice traversant complémentaire desdits maillons, lesquels moyens de verrouillage en rotation comprennent un assemblage entre une portion latérale non-circulaire dudit tronçon terminal, par exemple une portion comportant un méplat, et un maillon comportant un orifice traversant complémentaire ;
- le rouleau et/ou son arbre associé comportent des moyens de verrouillage en translation, adaptés à maintenir ledit arbre dans son logement traversant, par exemple des butées portées par les extrémités dudit arbre ;
- les arbres comportent chacun au moins un conduit pour le remplissage de la chambre étanche avec ledit fluide lubrifiant, lequel conduit comporte deux orifices, à savoir un orifice extérieur, débouchant avantageusement au niveau d'une extrémité dudit arbre, et un orifice intérieur, débouchant dans la chambre étanche.

La présente invention concerne encore un module de roulement, destiné à une application offshore, comprenant :
- une chaîne à rouleaux selon l'invention,
- un corps de guidage recevant ladite chaîne à rouleaux,
laquelle chaîne à rouleaux forme une chaîne à rouleaux recirculant comportant :
- un brin actif destiné à coopérant avec un chemin de roulement, complémentaire, et
- un brin retour.

La présente invention concerne également un équipement offshore, comprenant au moins un module de roulement selon l'invention, adapté à des installations telles qu'un pieux de fondation pour un mât de grue offshore ou un système de compensation active de la houle.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :

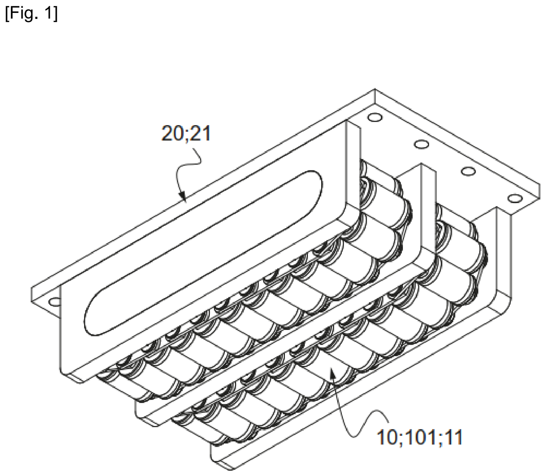

[Fig. 1] est une vue générale et en perspective d'un module de roulement équipé d'une chaîne à rouleaux selon l'invention ;
[Fig. 2] est une vue en coupe et schématique du module de roulement selon la figure 1 ;
[Fig. 3] est une vue partielle et schématique de la chaîne à rouleaux selon l'invention, montrant un rouleau qui est emmanché sur un arbre relié à des maillons, avec une vue partielle et agrandie d'un tronçon terminal qui coopère avec deux maillons ;

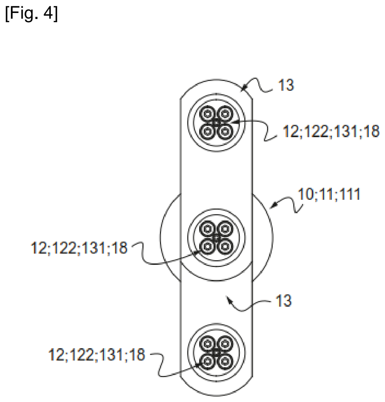

[Fig. 4] est une vue de côté de l'ensemble illustré sur la figure 3 ;
[Fig. 5] est une vue en coupe, générale et partielle, d'un rouleau qui est emmanché sur un arbre dans laquelle les joints annulaires présentent un premier mode de réalisation ;
[Fig. 6] est une vue en coupe, générale et partielle, d'un rouleau qui est emmanché sur un arbre dans laquelle les joints annulaires présentent un second mode de réalisation ;
[Fig. 7] est une vue de côté de deux maillons constitutifs de la chaîne à rouleaux selon l'invention.
[Fig. 8] est une vue schématique d'un premier exemple d'équipement offshore comportant des modules de roulement coopérant avec un anneau rotatif pour le maintien d'un pieu de fondation pour éolienne ;
[Fig. 9] est une vue schématique d'un second exemple d'équipement offshore comportant des modules de roulement selon l'invention, à savoir un système de compensation active de la houle pour la pose d'éolienne offshore.

Il est à noter que, sur ces figures, les éléments structurels et/ou fonctionnels communs aux différentes variantes peuvent présenter les mêmes références.

Tel que représenté sur les figures, la présente invention concerne une chaîne à rouleaux 10 pour un module de roulement recirculant 20, destinée à une application offshore.

Par « application offshore », on entend avantageusement toute utilisation dans des environnements situés au large des côtes, généralement en milieu maritime.

Ces applications sont caractérisées par leur exposition à des conditions environnementales spécifiques telles que :
- les contraintes marines : exposition à l'eau salée, à l'humidité, à la corrosion et aux variations de température ;
- les conditions dynamiques : présence de vagues et de houle notamment ;
- les charges importantes : sollicitations mécaniques élevées dues à des équipements lourds, tels que des éoliennes offshore ou des grues marines.

Ces applications incluent notamment, mais sans s'y limiter :
- la pose et la maintenance d'éoliennes offshore ;
- les systèmes de compensation active de la houle pour des opérations maritimes ;
- les équipements de transport et de manutention pour les colis en mer.

### Module de roulement

La présente invention concerne ainsi également le module de roulement recirculant 20, destiné à une application offshore.

Ce module de roulement recirculant 20 comprend avantageusement :
- une chaîne à rouleaux 10 selon l'invention,
- un corps de guidage 21 recevant cette chaîne à rouleaux 10.

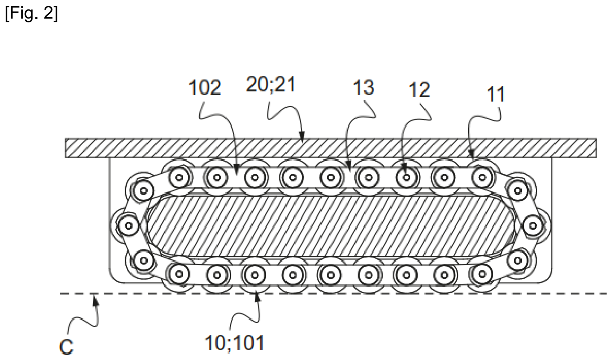

Tel que représenté sur la figure 2, la chaîne à rouleaux 10 forme une chaîne à rouleaux 10 recirculant qui comporte :
- un brin actif 101, destiné à coopérant avec un chemin de roulement C, complémentaire, et
- un brin retour 102.

Par « corps de guidage », on entend avantageusement une pièce manufacturée conçue pour assurer le guidage précis et stable de la chaîne à rouleaux dans un module de roulement recirculant.

Le corps de guidage joue un rôle dans la délimitation et la séparation des deux brins constituant la chaîne, à savoir le brin actif et le brin retour, tout en garantissant leur bon fonctionnement.

Il définit géométriquement les positions du brin actif et du brin retour, contribuant ainsi à la stabilité et à l'efficacité du module de roulement.

Le corps de guidage divise la chaîne à rouleaux en deux segments :
- le brin actif, qui coopère directement avec le chemin de roulement complémentaire pour transmettre des forces ou supporter des charges ;
- le brin retour, qui revient vers la position initiale sans interagir avec le chemin de roulement.

Le corps de guidage 21 est avantageusement réalisé dans des matériaux résistants à l'usure et adaptés à l'environnement offshore, comme des alliages métalliques, des composites renforcés ou des polymères techniques.

### Chaîne à rouleaux

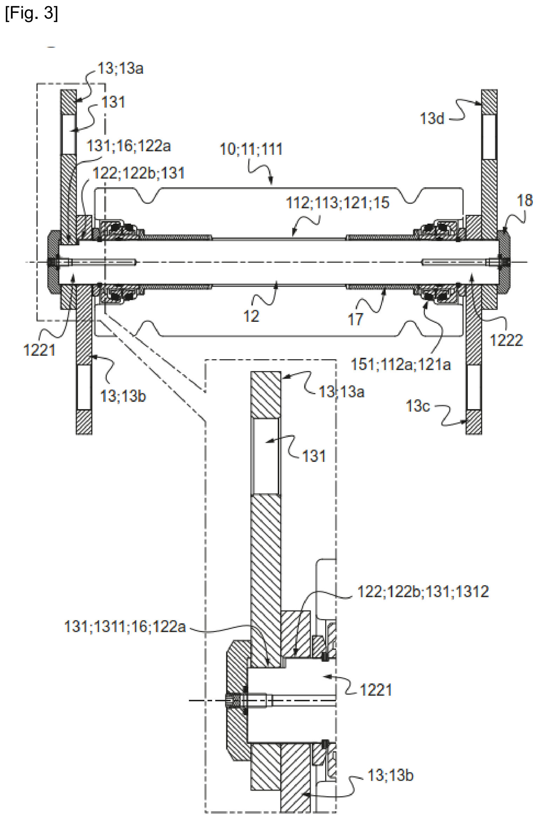

De manière générale et tel qu'illustré de manière générale sur les figures 2 et 3, la chaîne à rouleaux 10 comprend plusieurs rouleaux 11 qui sont emmanchés chacun sur un arbre 12.

Et, chaque arbre 12 est relié à un arbre 12 adjacent par deux maillons 13 (latéraux).

En d'autres termes, chaque arbre 12 est relié à :
- un premier arbre 12 adjacent par une première paire de maillons 13, et
- un second arbre 12 adjacent par une seconde paire de maillons 13.

Ainsi, chaque maillon 13 assure la liaison entre deux arbres 12 adjacents, permettant de créer une connexion mécanique continue le long de la chaîne à rouleaux.

De manière avantageusement, chaque maillon 13 consiste en une plaque métallique comportant deux orifices 131 (traversants) qui sont destinés à coopérer chacun avec un arbre 12.

Plus précisément, les rouleaux 11, de forme tubulaire, comportent chacun :
- une surface extérieure cylindrique 111, destinée à coopérer avec le chemin de roulement C et
- une surface intérieure cylindrique 112, définissant un logement traversant 113 dans lequel est emmanché un arbre 12.

Et chaque arbre 12 comporte une surface extérieure 121 venant en regard de la surface intérieure cylindrique 112 du rouleau 11 correspondant.

Selon l'invention, les rouleaux 11 sont libres en rotation par rapport à leurs arbres 12 associés.

Cette caractéristique permet un mouvement de rotation indépendant entre chaque rouleau et l'arbre correspondant. Cette configuration participe à la réduction des frottements au niveau de l'assemblage arbre / maillons, et à l'amélioration des performances mécaniques de la chaîne à rouleaux.

Selon un mode de réalisation préféré, le rouleau 11 et son arbre 12 associé coopèrent par le biais de moyens d'assemblage en rotation 17.

Ces moyens d'assemblage en rotation 17 sont avantageusement choisis parmi :
- des paliers lisses, ou
- des paliers à roulement.

Par « paliers lisses », on entend avantageusement des éléments mécaniques qui assurent le guidage et le support d'un mouvement de rotation du rouleau 11 par rapport à son arbre 12 associé, sans utiliser de composants roulants. Ces paliers lisses sont généralement constitués d'une surface de contact qui permet un glissement entre les pièces, tout en réduisant les frottements.

Par « paliers à roulement », on entend avantageusement des dispositifs mécaniques qui permettent le support et le guidage d'un mouvement de rotation du rouleau 11 par rapport à son arbre 12 associé, en minimisant les frottements grâce à l'utilisation de composants roulants tels que des billes, des rouleaux ou des aiguilles.

Les moyens d'assemblage en rotation 17 sont avantageusement rapportés entre la surface intérieure cylindrique 112 du rouleau 11 et la surface extérieure 121 dudit arbre 12.

De préférence encore, les moyens d'assemblage en rotation 17 comprennent deux paliers 17, par exemple :
- deux paliers lisses à collerette (figure 3 notamment), avantageusement en bronze, qui sont solidarisés ici avec la surface intérieure cylindrique 112, ou
- deux paliers à roulement (non représentés), par exemple des roulement à billes, des roulements à rouleaux ou des roulements à aiguilles.

Par ailleurs, chaque arbre 12 comporte encore deux tronçons terminaux 122 qui coopèrent avec un orifice traversant 131 complémentaire des maillons 13.

Les tronçons terminaux 122 s'étendent en saillie du rouleau 11 associé, de part et d'autre de ce rouleau 11 associé.

Plus précisément, chaque tronçon terminal 122 est apte à s'insérer au travers d'un orifice traversant 131 de deux maillons 13 juxtaposés, de sorte que :
- un premier maillon 13 est destiné à coopérer avec, d'une côté, ledit arbre 12 et, d'un autre côté, un premier arbre 12 adjacent et
- un second maillon 13 est destiné à coopérer avec, d'une côté, ledit arbre 12 et, d'un autre côté, un second arbre 12 adjacent.

Encore selon l'invention, la surface intérieure cylindrique 112 du rouleau 11 et la surface extérieure 121 dudit arbre 12 définissent une chambre étanche 15 qui est remplie d'un fluide lubrifiant.

Ce fluide remplit la chambre étanche 15, créée entre la surface intérieure cylindrique du rouleau et la surface extérieure de l'arbre. En particulier, ce fluide lubrifiant réduit les forces de frottement entre le rouleau et l'arbre, favorisant ainsi un mouvement fluide et réduisant l'usure mécanique.

Par exemple et de manière classique en soi, le fluide lubrifiant est choisi parmi les fluides lubrifiants adaptés aux applications offshore, par exemple les graisses ou les huiles.

De préférence, la chambre étanche 15 est obturée latéralement par deux joints annulaires 151 qui s'étendent chacun entre la surface intérieure cylindrique 112 du rouleau 11 et la surface extérieure 121 de l'arbre 12.

Chaque joint annulaire 151 est de préférence agencé entre un tronçon 112a de la surface intérieure cylindrique 112 du rouleau 11 et un tronçon 121a de la surface extérieure 121 de l'arbre 12.

Les deux tronçons 112a, 121a, en regard, sont le cas échéant de préférence à l'extérieur par rapport aux paliers 17.

En d'autres termes, les paliers 17 sont avantageusement positionnés entre les joints annulaires 151, au sein de la chambre étanche 15.

Encore en d'autres termes, les tronçons terminaux 122 s'étendent depuis les joints annulaires 151.

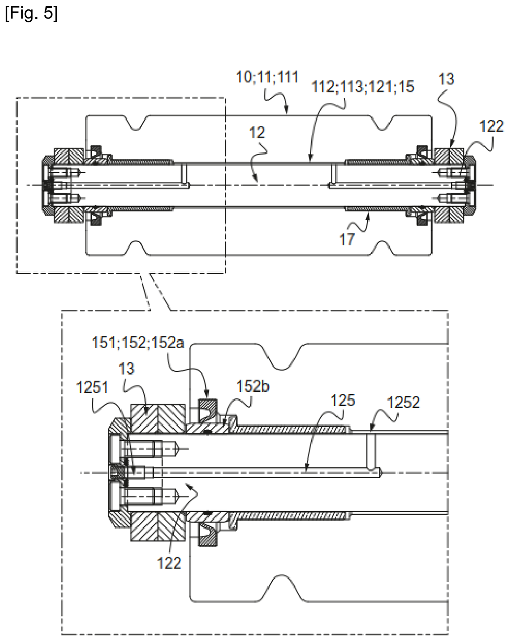

Selon un mode de réalisation illustré sur la figure 5, les joints annulaires 151 consistent en des joints à lèvre 152 qui comportent par exemple :
- un joint à lèvre 152a verrouillé en rotation (et de manière étanche) avec la surface intérieure cylindrique 112 du rouleau 11 et
- une bague d'étanchéité 152b verrouillée en rotation (et de manière étanche) avec la surface extérieure 121 dudit arbre 12.

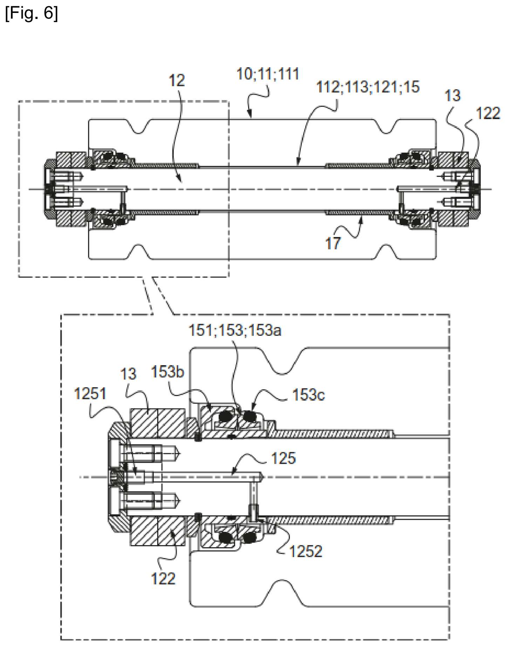

Selon un mode de réalisation illustré sur la figure 6, les joints annulaires 151 consistent en des joints métalliques 153 (dits encore « joints-glace »), comportant par exemple deux bagues d'étanchéité dont :
- une première bague d'étanchéité 153a est verrouillée en rotation avec la surface intérieure cylindrique 112 du rouleau 11 et
- une seconde bague d'étanchéité 153b est verrouillée en rotation avec la surface extérieure 121 dudit arbre 12.

De préférence, ces bagues d'étanchéité 153a, 153b consistent en des bagues frottantes métalliques identiques montées l'une contre l'autre et centrées dans leur emplacement par deux éléments en élastomère 153c exerçant une pression axiale uniforme.

Ces bagues d'étanchéité 153a, 153b sont en rotation l'une par rapport à l'autre, suivant le mouvement de rotation relatif entre le rouleau 11 et son arbre 12.

L'étanchéité entre ces bagues d'étanchéité 153a, 153b est assuré par frottement entre les deux éléments en contact.

De préférence et de manière générale, chaque arbre 12 comporte au moins un conduit 125 pour le remplissage de la chambre étanche 15 avec le fluide lubrifiant.

Tel qu'illustré sur la figure 5, ce conduit 125 comporte deux orifices :
- un orifice extérieur 1251, débouchant avantageusement au niveau d'une extrémité de l'arbre 12 et destiné à être obturé (par exemple au moins d'un bouchon), et
- un orifice intérieur 1252, débouchant dans la chambre étanche 15.

Le conduit 125 comporte par exemple une forme en L, avec :
- un premier tronçon s'étendant coaxialement à l'arbre 12, et
- un second tronçon s'étendant perpendiculairement à l'axe de cet arbre 12.

Toujours selon l'invention, chaque arbre 12 est verrouillé en rotation avec l'un au moins des maillons 13 associés par le biais de moyens de verrouillage en rotation 16.

De préférence, un maillon 13 est verrouillé en rotation avec deux arbres 12 adjacents. Et les autres maillons 13 sont libres en rotation par rapport aux deux arbres 12 adjacents.

De préférence, les arbres se déplacent linéairement le long des deux brins (actif et retour) sans subir de rotation autour de leur axe. Ce mouvement est rendu possible grâce au verrouillage mécanique des arbres avec certains maillons, empêchant leur rotation. Par ailleurs, les rouleaux, montés sur les arbres, pivotent librement autour des arbres. Cette configuration garantit que les rouleaux, et non les arbres, assurent la rotation nécessaire au fonctionnement du système.

Les frottements sont ainsi concentrés au niveau des interfaces entre les rouleaux et les arbres, où ils sont réduits grâce à la présence du fluide lubrifiant dans la chambre étanche.

En évitant la rotation des arbres, les frottements entre les arbres et les maillons sont minimisés, ce qui limite l'échauffement et l'usure mécanique des composants.

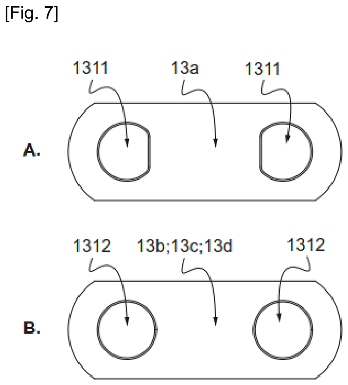

Pour cela, de manière avantageuse, les moyens de verrouillage en rotation 16 comprennent un assemblage entre :
- une portion latéral non-circulaire 122a d'un premier tronçon terminal 1221 (à gauche sur la vue partielle de la figure 3), par exemple une portion cylindrique comportant un méplat, et
- un premier maillon 13a comportant un orifice traversant 1311 complémentaire, non circulaire (figure 7A.).

De manière avantageuse, le premier tronçon terminal 1221 comporte encore une portion latérale circulaire 122b (à droite sur la vue partielle de la figure 3) apte à coopérer avec un orifice traversant 1312 complémentaire, circulaire, d'un second maillon 13b (figure 7B.). Cet assemblage autorise une rotation entre l'arbre 12 et ce second maillon 13b.

De préférence, le second tronçon terminal 1222 comporte une portion latérale circulaire apte à coopérer avec les orifices traversants 1312 complémentaires, circulaires, d'un troisième maillon 13c et d'un quatrième maillon 13d (figure 7B.).

Cet assemblage autorise une rotation entre le second tronçon terminal 1222 de l'arbre 12 et les deux maillons 13c, 13d associés.

Selon un mode de réalisation préféré, le premier maillon 13a est verrouillé en rotation avec deux arbres 12 adjacents. Et les autres maillons 13 sont libres en rotation par rapport aux deux arbres 12 adjacents.

Dans ce cas, ce premier maillon 13a comporte avantageusement deux orifices traversants 1311 non circulaire (figure 7A.). Et les autres maillons 13b, 13c et 13d comportent avantageusement deux orifices traversants 1312 circulaires (Figure 7B.).

Encore de manière générale, le rouleau 11 et/ou son arbre 12 associé comportent des moyens de verrouillage en translation 18, adaptés à maintenir cet arbre 12 dans son logement traversant 113.

Ces moyens de verrouillage en translation 18 consistent par exemple en des butées qui sont portées par les extrémités de l'arbre 12.

Ces butées 18 consistent par exemple en des disques rapportés, dont le diamètre est supérieur au diamètre des tronçons terminaux 122 de l'arbre 12.

De préférence, les maillons 13 sont alors avantageusement maintenus latéralement sur un tronçon terminal 122 par :
- une butée 18, à l'extérieur, et
- un joint 151, à l'intérieur.

### Equipement offshore

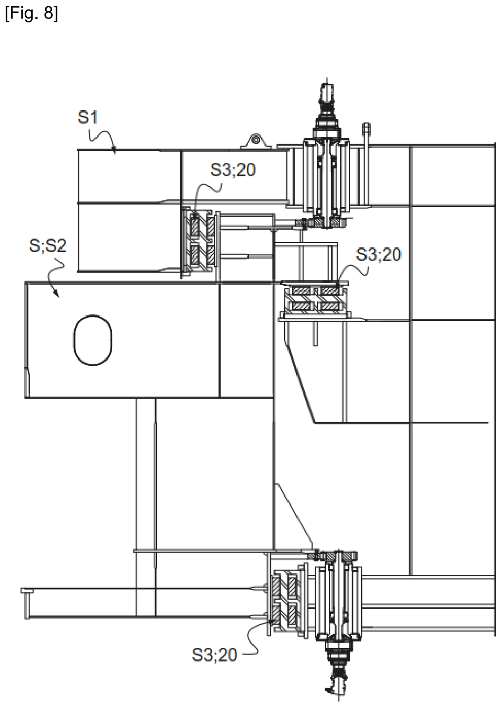

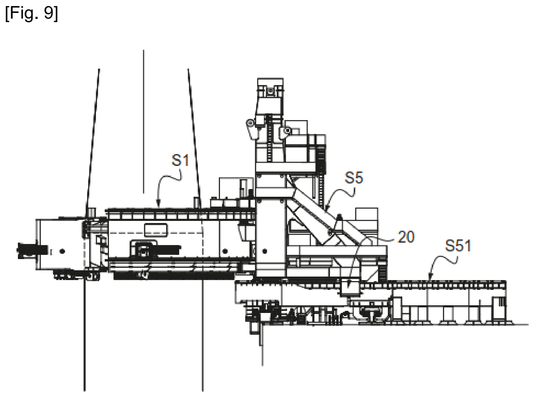

Le module de roulement 20 selon l'invention est adapté à équiper un équipement offshore tel que représenté sur les figures 8 et 9.

Selon un premier mode de réalisation illustré sur la figure 8 et tel que décrit dans le document FR3135098A1, le module de roulement selon l'invention peut équiper un système de maintien temporaire, pour le maintien temporaire, au cours des opérations de battage, d'un pieu de fondation destiné à recevoir le mat d'une éolienne off-shore.

Le système de maintien temporaire S comprend un manchon S1 destiné à ceinturer un tronçon d'un pieu de fondation et un châssis porteur S2 comprenant un module d'interface S3.

Le module d'interface S3 et le manchon S1 sont assemblés par le biais de moyens paliers comportant des module de roulement selon l'invention, destinés à conférer un degré de liberté en rotation audit manchon S1 par rapport audit châssis porteur S2.

Selon un second mode de réalisation illustré sur la figure 9 et tel que décrit dans le document FR3135098A1, un châssis porteur S5 peut comporter des moyens glissières S51 et des moyens de manœuvre (non représentés, destinés à générer des déplacements du manchon S1 selon des degrés de liberté en translation.

Les moyens glissières S51 comprennent au moins un élément roulant consistant avantageusement en des modules de roulement recirculant 20 selon l'invention.

### Mise en oeuvre de la chaîne à rouleaux

Selon l'invention, certains maillons 13 sont spécifiquement verrouillés en rotation sur les arbres 12 adjacents auxquels ils sont reliés, à l'aide de moyens de verrouillage 16 dédiés.

Ce verrouillage est réalisé, par exemple, par l'intermédiaire d'une portion non circulaire 122a des tronçons terminaux 1221 des arbres 12, tels qu'un méplat, qui s'insère dans un orifice traversant 1311 complémentaire des maillons 13 concernés. Cette configuration empêche toute rotation relative entre les arbres et ces maillons associés.

Cette disposition structurelle présente l'avantage de définir un ratio de rotation préférentiel entre les rouleaux et leurs arbres. En d'autres termes, le mouvement de la chaîne est concentré au niveau des interfaces entre les rouleaux et les arbres, tandis que les arbres restent fixes en rotation par rapport aux maillons 13a verrouillés. Cette caractéristique permet de minimiser les contraintes mécaniques exercées sur les maillons 13.

Les déplacements de la chaîne au sein de son corps de guidage engendrent principalement une rotation relative entre les rouleaux et les arbres. Par conséquent, la rotation des maillons par rapport aux arbres est limitée aux mouvements strictement nécessaires à l'évolution de la chaîne dans le module de roulement recirculant.

Cette configuration contribue également à préserver les maillons en réduisant l'usure résultant des mouvements répétés. En limitant les contraintes mécaniques localisées sur les points de liaison critiques, notamment dans les environnements dynamiques et exigeants tels que les applications offshore, le dispositif garantit une plus grande longévité des composants.

## Revendications

1. Chaîne à rouleaux (10) pour un module de roulement recirculant (20), destinée à une application offshore,
laquelle chaîne à rouleaux (10) comprend plusieurs rouleaux (11) qui sont emmanchés chacun sur un arbre (12),
chaque arbre (12) comportant une surface extérieure (121) et étant relié à un arbre (12) adjacent par deux maillons (13),
**caractérisé en ce que** lesdits rouleaux (11), de forme tubulaire, comportent chacun :
- une surface extérieure cylindrique (111), et
- une surface intérieure cylindrique (112), définissant un logement traversant (113) dans lequel est emmanché ledit arbre (12),
lesquels rouleaux (11) sont libres en rotation par rapport à leurs arbres (12) associés,
laquelle surface intérieure cylindrique (112) dudit rouleau (11) et laquelle surface extérieure (121) dudit arbre (12) définissent une chambre étanche (15) qui est remplie d'un fluide lubrifiant,
et **en ce que** chaque arbre (12) est verrouillé en rotation avec l'un au moins desdits maillons (13) associés par le biais de moyens de verrouillage en rotation (16).

2. Chaîne à rouleaux (10) selon la revendication 1, **caractérisée en ce que** le rouleau (11) et son arbre (12) associé coopèrent par le biais de moyens d'assemblage en rotation (17), avantageusement choisis parmi des paliers lisses ou des paliers à roulement, avantageusement rapportés entre ladite surface intérieure cylindrique (112) dudit rouleau (11) et ladite surface extérieure (121) dudit arbre (12).

3. Chaîne à rouleaux (10) selon la revendication 2, **caractérisée en ce que** les moyens d'assemblage en rotation (17) comprennent deux paliers, par exemple :
- deux paliers lisses à collerette, avantageusement en bronze, qui sont solidarisés avec ladite surface intérieure cylindrique (112), ou
- deux paliers à roulement, par exemple des roulement à billes, des roulements à rouleaux ou des roulements à aiguilles.

4. Chaîne à rouleaux (10) selon l'une quelconque des revendications précédentes, **caractérisée en ce que** ladite chambre étanche (15) est obturée latéralement par deux joints annulaires (151) qui s'étendent chacun entre la surface intérieure cylindrique (112) dudit rouleau (11) et la surface extérieure (121) dudit arbre (12).

5. Chaîne à rouleaux (10) selon la revendication 4, **caractérisée en ce que** chaque joint annulaire (151) est agencé entre un tronçon (112a) de la surface intérieure cylindrique (112) dudit rouleau (11) et un tronçon (121a) de la surface extérieure (121) dudit arbre (12),
lesquels tronçons (11a ; 121a) sont le cas échéant à l'extérieur par rapport auxdits paliers (17).

6. Chaîne à rouleaux (10) selon l'une quelconque des revendications 4 ou 5, **caractérisée en ce que** les joints annulaires (151) sont choisis parmi :
- les joints métalliques (153), comportant par exemple deux bagues d'étanchéité dont une première bague d'étanchéité (153a) est verrouillée en rotation avec la surface intérieure cylindrique (112) dudit rouleau (11) et une seconde bague d'étanchéité (153b) est verrouillée en rotation avec la surface extérieure (121) dudit arbre (12), ou
- les joints à lèvre (152), comportant par exemple un joint à lèvre (152a) verrouillé en rotation avec la surface intérieure cylindrique (112) dudit rouleau (11) et une bague d'étanchéité (152b) verrouillée en rotation avec la surface extérieure (121) dudit arbre (12).

7. Chaîne à rouleaux (10) selon l'une quelconque des revendications précédentes, **caractérisée en ce que** ledit arbre (12) comporte deux tronçons terminaux (122) coopérant avec un orifice traversant (131 ; 1311 ; 1312) complémentaire desdits maillons (13),
lesquels moyens de verrouillage en rotation (16) comprennent un assemblage entre :
- une portion latéral non-circulaire (122a) dudit tronçon terminal (122), par exemple une portion comportant un méplat, et
- un maillon (13) comportant un orifice traversant (1311) complémentaire.

8. Chaîne à rouleaux (10) selon l'une quelconque des revendications précédentes, **caractérisée en ce que** le rouleau (11) et/ou son arbre (12) associé comportent des moyens de verrouillage en translation (18), adaptés à maintenir ledit arbre (12) dans son logement traversant (113), par exemple des butées portées par les extrémités dudit arbre (12).

9. Chaîne à rouleaux (10) selon l'une quelconque des revendications précédentes, **caractérisée en ce que** les arbres (12) comportent chacun au moins un conduit (125) pour le remplissage de la chambre étanche (15) avec ledit fluide lubrifiant, lequel conduit (125) comporte deux orifices :
- un orifice extérieur (1251), débouchant avantageusement au niveau d'une extrémité dudit arbre (12), et
- un orifice intérieur (1252), débouchant dans la chambre étanche (15).

10. Module de roulement, destiné à une application offshore, comprenant :
- une chaîne à rouleaux (10) selon l'une quelconque des revendications précédentes,
- un corps de guidage (21) recevant ladite chaîne à rouleaux (11),
laquelle chaîne à rouleaux (10) forme une chaîne à rouleaux (10) recirculant comportant :
- un brin actif (101) destiné à coopérant avec un chemin de roulement (C), complémentaire, et
- un brin retour (102).

11. Équipement offshore, comprenant au moins un module de roulement selon la revendication 10, adapté à des installations telles qu'un pieu de fondation ou un système de compensation active de la houle.
